# EUROPÄISCHE PATENTANMELDUNG

(11) **EP 2 876 343 A1**
(43) Veröffentlichungstag der Anmeldung: **27.05.2015**
(21) Anmeldenummer: 14191622.1
(22) Anmeldetag: 04.11.2014
(51) Int. Cl.: F16L 23/028, F16L 25/00, F16L 33/26

(54) **Verbindung mit einem profilierten Schlauchleitungselement**

(30) Priorität: 15.11.2013 DE 102013112630
(71) Anmelder: Witzenmann GmbH, 75175 Pforzheim (DE)
(72) Erfinder: Eilber, Edgar, 75228 Ispringen (DE); Tuncsik, Christoph, 76332 Bad Herrenalb (DE)
(74) Vertreter: Lemcke, Brommer & Partner Patentanwälte Partnerschaft mbB

(57) **Zusammenfassung**

Vorgeschlagen wird eine Verbindung (1) zwischen einem profilierten, vorzugsweise gewellten, höchst vorzugsweise ring- oder wendelgewellten, insbesondere gewickelten, Schlauchleitungselement (2) und einem Anschlussteil (3), welches Anschlussteil das Schlauchleitungselement an einem Verbindungsende umgibt, mit einem Dichtelement (4), welches zwischen Anschlussteil und Schlauchleitungselement angeordnet ist, welche sich dadurch auszeichnet, dass das Anschlussteil (3) ein Flanschelement (5) und ein Klemmelement (6) umfasst, welches Klemmelement zwischen Flanschelement und Dichtelement (4) angeordnet ist und mit dem Flanschelement derart zusammenwirkt, dass bei axialer Relativverschiebung von Flanschelement und Klemmelement eine Kraftwirkung in radialer Richtung auf das Dichtelement bewirkbar oder bewirkt ist, um das Dichtelement dichtend an dem Schlauchleitungselement (2) in Anlage zu bringen.

## Beschreibung

Die Erfindung betrifft eine Verbindung gemäß Anspruch 1 zwischen einem profilierten, vorzugsweise gewellten, höchst vorzugsweise ring- oder wendelgewellten Schlauchleitungselement und einem Anschlussteil.

Aus der DE 295 18 712 U1 und aus der EP 0 775 865 A1 ist eine Anordnung zum Verbinden des Endes eines schraubenlinienförmig gewellten Metallrohres mit einem Anschlussstück bekannt, bei der ein Druckring auf das Ende des schraubenlinienförmig gewellten Metallrohres aufgeschraubt ist und mit einem axialen Vorsprung in eine entsprechende Ausnehmung des Anschlussstücks eingreift, um so einen in einer Dichtkammer angeordneten Dichtring aus Graphit durch axiales Gegenziehen von Druckring und Anschlussstück zu komprimieren, um eine dichte Verbindung zu erhalten.

Der Erfindung liegt die Aufgabe zugrunde, eine alternative Verbindung der genannten Art zu schaffen, welche sich zudem durch eine ausreichende Dichtheit und eine besondere Montagefreundlichkeit auszeichnet.

Diese Aufgabe wird erfindungsgemäß gelöst durch eine Verbindung mit den Merkmalen des Anspruchs 1. Vorteilhafte Weiterbildungen der erfindungsgemäßen Verbindung sind Gegenstand von Unteransprüchen.

Erfindungsgemäß ist eine Verbindung zwischen einem profilierten, vorzugsweise gewellten, höchst vorzugsweise ring- oder wendelgewellten, insbesondere gewickelten, Schlauchleitungselement und einem Anschlussteil, welches Anschlussteil das Schlauchleitungselement an einem Verbindungsende umgibt, mit einem Dichtelement, welches zwischen Anschlussteil und Schlauchleitungselement angeordnet ist, dadurch gekennzeichnet, dass das Anschlussteil ein Flanschelement und ein Klemmelement umfasst, welches Klemmelement zwischen Flanschelement und Dichtelement angeordnet ist und mit dem Flanschelement derart zusammenwirkt, dass bei axialer Relativverschiebung von Flanschelement und Klemmelement eine Kraftwirkung in radialer Richtung auf das Dichtelement bewirkbar oder bewirkt ist, um das Dichtelement dichtend an dem Schlauchleitungselement in Anlage zu bringen.

Dies schafft eine einfache und preiswerte, schweißlose Verbindungstechnik, die auch unter Baustellenbedingungen einfach zu handhaben ist.

Vorzugsweise ist das zum Einsatz kommende Dichtelement nicht - nicht wie nach dem Stand der Technik - in Graphit ausgebildet, sondern aus einem Elastomer, speziell aus Ethylen-Propylen-Dien-Kautschuk (EPDM), welches über das Verbindungsende des Schlauchleitungselements gezogen wird. Zuvor wird das weiter oben genannte Flanschelement aufgesteckt. Höchst vorzugsweise werden anschließend über das Dichtelement zwei Halbschalen-Elemente gelegt, welche das genannte Klemmelement bilden. Vorteilhafterweise sind die beiden Halbschalen-Elemente (vorliegend auch als Umfangssegmente bezeichnet) im Außendurchmesser konisch ausgebildet. Gemäß einer entsprechenden Ausgestaltung kann auch der Innendurchmesser des Flanschelementes konisch ausgeformt sein, und es kommt beim Anziehen der Flanschverbindung zu einer Verpressung des Dichtelements auf dem Schlauchleitungselement, welches speziell als Wendelwellschlauch ausgebildet sein kann.

Derartige Verbindungen eignen sich insbesondere für den Einsatz in Fernwärmeanwendungen, aber - ohne Beschränkung - auch für Schlauchleitungen in Biogasgeneratoren.

Eine Weiterbildung der erfindungsgemäßen Verbindung sieht vor, dass das Flanschelement in einem Bereich in dem es mit dem Klemmelement zusammenwirkt, eine schräg zu einer Längsachse der Anordnung aus Anschlussteil und Schlauchleitungselement orientierte, vorzugsweise konische, Innenfläche aufweist. Hierauf wurde weiter oben bereits hingewiesen.

Eine wieder andere Weiterbildung der erfindungsgemäßen Verbindung sieht vor, dass das Klemmelement in einem Bereich, in dem es mit dem Flanschelement zusammenwirkt, eine schräg zu einer Längsachse der Anordnung orientierte, vorzugsweise konische, Außenfläche aufweist, welche Außenfläche höchst vorzugsweise komplementär zu der weiter oben erwähnten, schräg orientierten Innenfläche des Flanschelements ausgebildet ist.

Auf diese Weise lässt sich die weiter oben als besonders vorteilhaft beschriebene Ausgestaltung realisieren, welche beim Anziehen der Flanschverbindung zu einer Verpressung des Dichtelements auf dem Schlauchleitungselement führt.

Weiter oben ebenfalls bereits angesprochen wurde, sieht eine andere, vorteilhafte Weiterbildung der erfindungsgemäßen Verbindung vor, dass das Klemmelement mehrteilig ausgebildet ist, wobei es mehrere Umfangssegmente oder (Halb-)Schalen aufweisen kann. Höchst vorzugsweise sind zwei solche Umfangssegmente vorgesehen, welche gemeinsam das Schlauchleitungselement und das Dichtelement im Wesentlichen voll umfänglich umfassen. Die Erfindung ist nicht auf eine bestimmte Anzahl von Umfangssegmenten beschränkt.

Weiterhin kann vorgesehen sein, dass das Klemmelement, vorzugsweise an wenigstens einem der Umfangssegmente, einen sich radial erstreckenden Vorsprung aufweist, mit dem das Klemmelement in die Wellung eines als profiliertes Schlauchleitungselement ausgebildeten Schlauchleitungselements in Eingriff bringbar oder in Eingriff gebracht ist. Bei dem Schlauchleitungselement kann es sich insbesondere um einen Wellschlauch, vorzugsweise einen Wendelwellschlauch, oder um einen Wickelschlauch handeln.

Der genannte Vorsprung fungiert als Führung des Klemmelements bzw. von dessen Einzelteilen (Umfangssegmenten) entlang der Wellung bzw. Profilierung des Schlauchleitungselements, so dass sich das Klemmelement respektive dessen Einzelteile auf ein als Wendelwellschlauch ausgebildetes Schlauchleitungselement aufschrauben lässt bzw. lassen. Der genannte Vorsprung kann als solcher wiederum eine Profilierung an seiner dem Schlauchleitungselement zugewandten Stirnseite aufweisen, welche an die Profilierung des Wendelwellschlauchs angepasst sein kann.

Vorzugweise ist der genannte Vorsprung an einem dem Flanschelement abgewandten Ende des Klemmelements angeordnet. Alternativ zu der bereits angesprochenen Profilierung kann der Vorsprung im Längsschnitt im Wesentlichen rechteckig ausgebildet sein.

Hier und an anderer Stelle bedeutet die Formulierung "im Wesentlichen", dass das betreffende Merkmal bis auf übliche Fertigungs- oder Designtoleranzen exakt ausgebildet ist.

Vorteilhafter Weise erstreckt sich der Vorsprung über einen Bruchteil des Umfangs des Klemmelements, vorzugsweise über einen Winkelbereich von etwa 10° bis 40°, höchst vorzugsweise etwa 20° bis 30°. Dies hat sich in Bezug auf Handhabung und/oder Klemmwirkung als besonders vorteilhaft erwiesen.

Des Weiteren kann vorgesehen sein, dass das Dichtelement ein, vorzugsweise umlaufenden, radialen Vorsprung aufweist, welcher sich von dem Schlauchleitungselement weg erstreckt. In Weiterbildung dieser Ausgestaltung kann vorgesehen sein, dass der genannte radiale Vorsprung des Dichtelements das Flanschelement und/oder das Klemmelement im Bereich des Verbindungsendes in radialer Richtung übergreift. Auf diese Weise ergibt sich in axialer Richtung eine definierte Lage des Dichtelements, insbesondere wenn dieses mit dem genannten radialen Vorsprung an dem Klemmelement in Anlage befindlich ist. Außerdem kann der Übergriff des Dichtelement zur Abdichtung gegenüber weiteren Bauteilen verwendet werden.

Des Weiteren kann vorgesehen sein, dass auch das Klemmelement einen, insbesondere umlaufenden, radialen Vorsprung aufweist, der sich von dem Schlauchleitungselement weg erstreckt und der vorzugsweise das Flanschelement im Bereich des Verbindungsendes in radialer Richtung übergreift. Der genannte radiale Vorsprung des Klemmelements kann einerseits als Anlage für den genannten radialen Vorsprung des Dichtelements dienen, andererseits fungiert der genannte radiale Vorsprung des Klemmelements als Anschlag gegenüber dem Flanschelement und definiert so eine maximale axiale Relativverschiebung des Flanschelements und Klemmelement verbunden mit einer definierten Abdichtung der Verbindung.

Im Zuge einer anderen Weiterbildung der erfindungsgemäßen Verbindung kann noch vorgesehen sein, dass das Dichtelement an seiner dem Schlauchleitungselement zugewandten Innenfläche zumindest abschnittweise und zumindest vor Herstellung einer dichten Verbindung im Wesentlichen eben ausgebildet ist. Eine formmäßige Anpassung des Dichtelements an die Profilierung des Schlauchleitungselements erfolgt demgemäß also erst aufgrund der erfindungsgemäßen Kraftwirkung in radialer Richtung, wodurch das Dichtelement dichtend an dem Schlauchleitungselement in Anlage gebracht wird.

Alternativ kann jedoch auch vorgesehen sein, dass das Dichtelement an seiner dem Schlauchleitungselement zugewandten Innenfläche zumindest abschnittweise mit einer zur Profilierung des Schlauchleitungselements komplementären Formgebung als so genannte Formdichtung ausgebildet ist. Auf diese Weise ist zwecks formmäßiger Anpassung des Dichtelements an dem Schlauchleitungselement nur eine geringere Krafteinwirkung erforderlich.

Wie weiter oben bereits angesprochen wurde, sieht eine äußerst vorteilhafte Weiterbildung der erfindungsgemäßen Verbindung vor, dass das Dichtelement in einem Elastomer, speziell in EPDM, ausgebildet ist. Alternativ kann jedoch vorgesehen sein, dass das Dichtelement in Graphit oder in Blähton oder in einem vorzugsweise keramischen Material, welches bei Wärmebeaufschlagung sein Volumen vergrößert, beispielsweise Interam® von 3M™ oder einem vergleichbaren Material, ausgebildet ist. Weitere mögliche Materialien, die sich unter Wärmebeaufschlagung definiert ausdehnen sind, beispielsweise und ohne Beschränkung Interam 5 NC (3M), Isomat AV5 (Unifrax), Ibiden N2.3 (Ibiden) oder Maftec OBMF (Temtec). Insbesondere die keramischen Materialien sind für Verwendungen bis hin zu relativ hohen Temperaturen im Bereich von 850 °C geeignet.

Weitere Eigenschaften und Vorteile der Erfindung ergeben sich aus der nachfolgenden Beschreibung von Ausführungsbeispielen anhand der Zeichnung.
- Figur 1: zeigt im Längsschnitt eine erste Ausgestaltung der erfindungsgemäßen Verbindung;
- Figur 2: zeigt die Verbindung aus Figur 1 in der Draufsicht;
- Figur 3: zeigt die Verbindung gemäß Figur 1 in einer perspektivischen Ansicht; und
- Figur 4: zeigt im rechten Teil der Abbildung eine alternative Ausgestaltung der erfindungsgemäßen Verbindung.

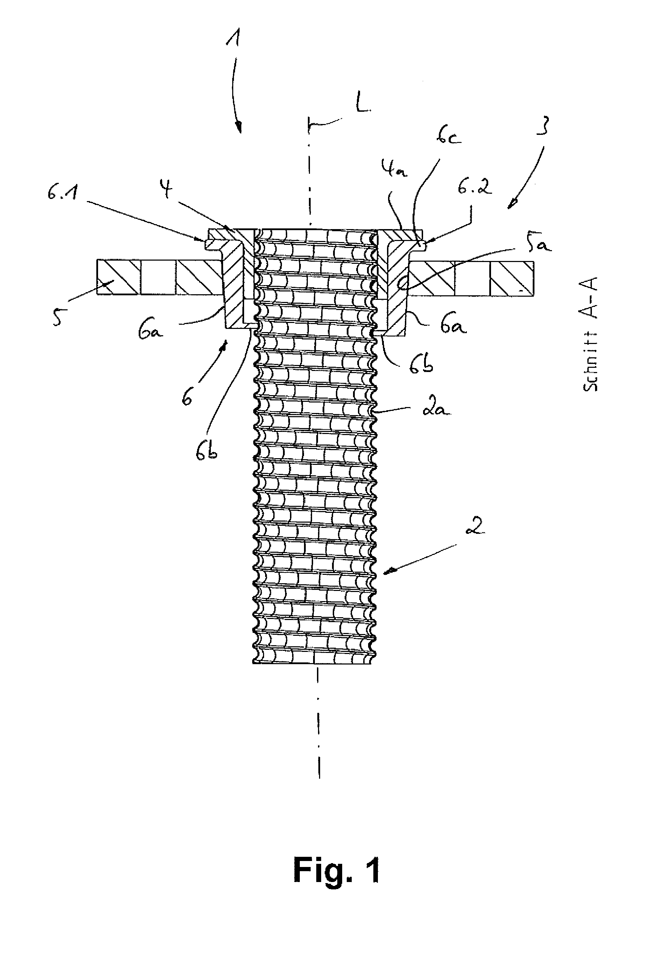

Figur 1 zeigt eine erfindungsgemäße Verbindung, welche in ihrer Gesamtheit mit dem Bezugszeichen 1 bezeichnet ist, zwischen einem wendelgewellten Schlauchleitungselement 2 und einem Anschlussteil 3. Das Anschlussteil 3 umgibt das Schlauchleitungselement 2 an einem Verbindungsende desselben, wobei zwischen Anschlussteil 3 und Schlauchleitungselement 2 am Verbindungsende ein Dichtelement 4 angeordnet ist. Das Anschlussteil 3 umfasst ein Flanschelement 5 sowie ein zweiteiliges Klemmelement 6, dessen Einzelteile (auch als Umfangssegmente oder Halbschalen bezeichnet) mit Bezugszeichen 6.1 und 6.2 bezeichnet sind.

Die Umfangssegmente 6.1, 6.2 des Klemmelements 6 weisen eine Außenumfangsfläche 6a auf, die schräg zu einer Längsachse L der gezeigten Anordnung orientiert ist. Dieses ist gleichbedeutend damit, dass das Klemmelement 6 im Außendurchmesser konisch ausgebildet ist. Das Flanschelement 5 weist einen nicht näher bezeichneten zentralen Durchbruch auf, innerhalb dessen das Klemmelement 6, das Dichtelement 4 und das Schlauchleitungselement 2 angeordnet sind. Dieser Durchbruch bzw. der Innendurchmesser des Flanschteils 5 weist ebenfalls eine Seitenfläche 5a auf, die bezogen auf die Längsachse L der Anordnung schräg orientiert ist. Die beiden Umfangssegmente 6.1, 6.2 des Klemmelements 6 weisen an ihrem jeweiligen dem Flanschelement 5 abgewandten Ende einen sich radial erstreckenden Vorsprung 6b auf, der nach Art einer Haltenocke von außen in die Profilierung 2a des Schlauchleitungselements 2 eingreift.

Wenn nun die gezeigte Flanschverbindung angezogen wird und es zu einer relativen Verschiebung zwischen dem Klemmelement 6 bzw. dessen Umfangssegmenten 6.1, 6.2 einerseits und dem Flanschelement 5 andererseits kommt, resultiert eine Verpressung des zwischen Klemmelement 6 und Schlauchleitungselement 2 angeordneten Dichtelements 4 auf dem Schlauchleitungselement 2, so dass die Verbindung 1 abgedichtet ist.

Das Dichtelement 4 weist bei Bezugszeichen 4a einen umlaufenden radialen Vorsprung auf, mit dem es an dem Klemmelement 6 anliegt, so dass eine definierte relative Positionierung von Klemmelement 6 und Dichtelement 4 erreicht ist. Außerdem kann das Dichtelement 4 im Bereich des Vorsprungs 4a gegenüber weiteren, nicht gezeigten Verbindungsbestandteilen dichtend wirken. Gemäß Figur 1 besitzt das Klemmelement 6 bzw. dessen Umfangssegmente 6.1, 6.2 einen entsprechenden radial umlaufenden Vorsprung 6c, an dem einerseits das Dichtelement 4 anliegt und der andererseits für eine definierte Eindringtiefe des Klemmelements 6 im Bereich des zentralen Durchbruchs des Flanschelements 5 sorgt. Spätestens, wenn das Klemmelement 6 mit dem genannten Vorsprung 6c an dem Flanschelement 5 anliegt, ist eine weitere Relativverschiebung von Klemmelement 6 und Flanschelement 5 nicht mehr möglich.

Das Dichtelement 4 gemäß Figur 1 kann in einem Elastomer, wie EPDM, oder in einem anderen, geeigneten Dichtstoff ausgebildet sein, beispielsweise Graphit oder Blähton.

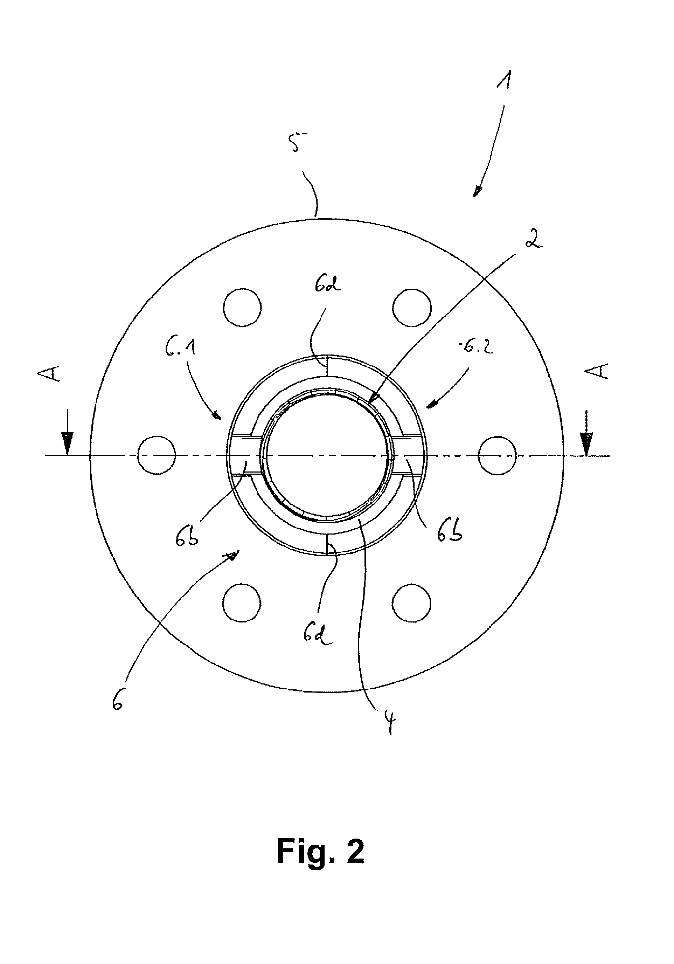

Figur 2 zeigt eine Draufsicht auf die Ausgestaltung der Verbindung 1 gemäß Figur 1 mit Blick auf das im unteren Bereich in Figur 1 gezeigte "freie Ende" des Schlauchleitungselements 2. Besonders gut erkennbar sind in Figur 2 die Vorsprünge bzw. Haltenocken 6b an den Umfangssegmenten 6.1, 6.2 des Klemmelements 6. Außerdem erkennt man in Figur 2 Trennstellen oder Stoßstellen 6b zwischen den beiden Umfangssegmenten 6.1, 6.2.

Die Vorsprünge 6b erstrecken sich gemäß Figur 2 nur über einen begrenzten Umfangsbereich, der etwa bei 20° bis 30° liegt. An ihrem dem Schlauchleitungselement 2 zugewandten Ende sind die Vorsprünge 6b in der Draufsicht leicht konkav abgerundet ausgebildet, so dass sie sich an die Rundung des Schlauchleitungselements 2 anschmiegen.

Die Linie A-A in Figur 2 bezeichnet die Schnittlinie entsprechend der Darstellung in Figur 1.

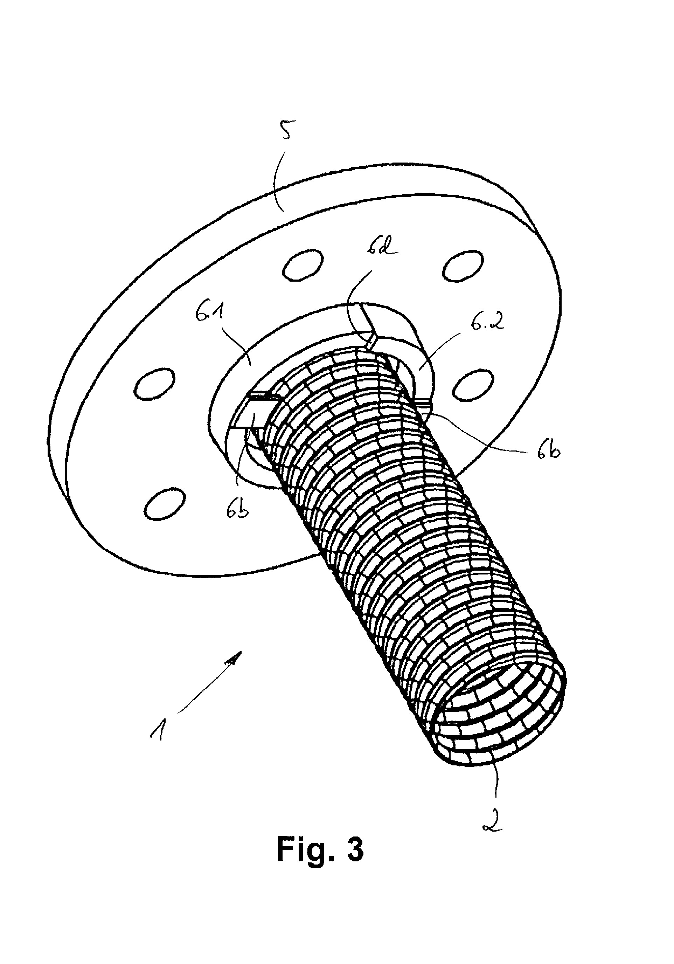

In Figur 3 ist eine perspektivische Darstellung der Verbindung 1 gemäß den Figuren 1 und 2. Sie verdeutlicht insbesondere nochmals die Ausbildung des Klemmelements 6 aus zwei Halbschalen oder Untersegmenten 6.1, 6.2, die an der Trennstelle 6d aneinander stoßen und sich jeweils über den halben Umfang des Schlauchleitungselements 2 erstrecken.

Da das Schlauchleitungselement 2 als wendelgewellter Schlauch ausgebildet ist, ist das eine Umfangssegment 6.2 in axialer Richtung der Anordnung zu dem anderen Umfangssegment 6.1 versetzt angeordnet, wie sich der Figur 3 gut entnehmen lässt.

Ein derartiger Versatz würde nicht auftreten, wenn es sich bei dem Schlauchleitungselement 2 beispielsweise um einen ringgewellten Schlauch handelte, was grundsätzlich im Rahmen der Erfindung liegt.

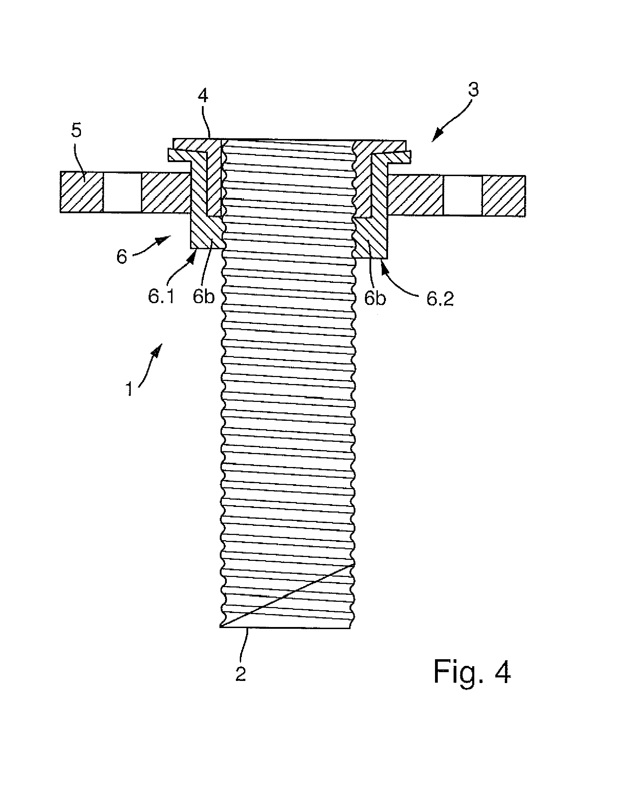

Schließlich zeigt Figur 4 im Längsschnitt noch eine weitere Ausgestaltung der erfindungsgemäßen Verbindung 1, welche allerdings grundsätzlich der Ausführungsform gemäß Figur 1 entspricht. So kann auf detaillierte Erläuterungen der Ausgestaltung gemäß Figur 4 verzichtet werden.

Ein wesentlicher Unterschied zur Ausgestaltung gemäß Figur 1 findet sich im rechten Teil der Figur 4 im Bereich des Dichtelements 4 und des Klemmelements 6 bzw. dessen Umfangssegments 6.2:

Wie man der Abbildung in Figur 4 in dem genannten Bereich entnimmt, ist der radiale Vorsprung 6b des Klemmelements-Umfangssegments 6.2 in axialer Richtung relativ breit ausgebildet und erstreckt sich über mehrere Wellungen des Schlauchleitungselements 2. In diesem Bereich ist der genannte Vorsprung 6b außerdem seinerseits profiliert ausgebildet, wobei die Profilierung des Vorsprungs 6b gerade komplementär zu der Profilierung des Schlauchleitungselements 2 ausgebildet ist, vorliegend also nach Art eines Innengewindes.

Im linken Teil der Abbildung in Figur 4 ist dagegen ein Vorsprung 6b an dem Umfangssegment 6.1 dargestellt, welcher der Ausgestaltung gemäß Figur 1 im Wesentlichen entspricht.

Ein weiterer Unterschied findet sich in Figur 4 im Bereich des Dichtelements 4 auf der rechten Seite der Anordnung. Das Dichtelement ist hier als so genannte Formdichtung dargestellt, welche beispielsweise aus EPDM bestehen kann. Die genannte Formdichtung weist auf ihrer Innenseite ebenfalls eine zu der Profilierung des Schlauchleitungselements 2 komplementäre Profilierung auf und liegt so vollflächig an der Außenseite des Schlauchleitungselements 2 an, was eine verbesserte Dichtwirkung bei geringerem Kraftaufwand bedeuten kann.

Obwohl es grundsätzlich im Bereich der Erfindung liegt, das (zweiteilige) Klemmelement 6 in Bezug auf die Umfangssegmente 6.1, 6.2 unterschiedlich auszugestalten, beispielsweise gemäß Figur 4, ist hinsichtlich des Dichtelements 4 vorgesehen, dieses vollständig entweder wie im linken Teil von Figur 4 oder wie im rechten Teil der Figur 4 auszubilden.

Grundsätzlich kommt jedoch auch in Betracht, das Dichtelement 4 aus einem derart weichen Material herzustellen, dass bei einem Anziehen der Verbindung sich eine Verformung des Dichtelements 4 einstellt, so dass dieses im Wesentlichen gemäß der Darstellung im rechten Teil von Figur 4 in die Wellung des Schlauchelements 2 eindringt, ohne bereits entsprechend vorgeformt gewesen zu sein.

Durch den radialen Übergriff des Dichtelements 4 im Bereich 4a (vgl. Figur 1 und Figur 4) lässt sich eine weitere Abdichtung gegenüber zusätzlichen Bauteilen (nicht gezeigt) erreichen, die im Bereich des genannten Dichtungsübergriffs 4a mit der dargestellten Anordnung in Kontakt treten, worauf bereits früher hingewiesen wurde.

## Patentansprüche

1. Verbindung (1) zwischen einem profilierten, vorzugsweise gewellten, höchst vorzugsweise ring- oder wendelgewellten, insbesondere gewickelten, Schlauchleitungselement (2) und einem Anschlussteil, welches Anschlussteil das Schlauchleitungselement an einem Verbindungsende umgibt, mit einem Dichtelement (4), welches zwischen Anschlussteil und Schlauchleitungselement angeordnet ist,
**dadurch gekennzeichnet, dass**
das Anschlussteil (3) ein Flanschelement (5) und ein Klemmelement (6) umfasst, welches Klemmelement zwischen Flanschelement und Dichtelement (4) angeordnet ist und mit dem Flanschelement derart zusammenwirkt, dass bei axialer Relativverschiebung von Flanschelement und Klemmelement eine Kraftwirkung in radialer Richtung auf das Dichtelement bewirkbar oder bewirkt ist, um das Dichtelement dichtend an dem Schlauchleitungselement (2) in Anlage zu bringen.

2. Verbindung (1) nach Anspruch 1,
**dadurch gekennzeichnet, dass**
das Flanschelement (5) in einem Bereich, in dem es mit dem Klemmelement (6) zusammenwirkt, eine schräg zu einer Längsachse (L) der Anordnung orientierte, vorzugsweise konische, Innenfläche (5a) aufweist.

3. Verbindung (1) nach Anspruch 1 oder 2,
**dadurch gekennzeichnet, dass**
das Klemmelement (6) in einem Bereich, in dem es mit dem Flanschelement (5) zusammenwirkt, eine schräg zu einer Längsachse (L) der Anordnung orientierte, vorzugsweise konische, Außenfläche (6a) aufweist, welche Außenfläche höchst vorzugsweise komplementär zu der Innenfläche (5a) gemäß Anspruch 2 ausgebildet ist.

4. Verbindung (1) nach einem der Ansprüche 1 bis 3,
**dadurch gekennzeichnet, dass**
das Klemmelement (6) mehrteilig ausgebildet ist, vorzugsweise aus mehreren Umfangssegmenten (6.1, 6.2), höchst vorzugsweise zwei Umfangssegmenten (6.1, 6.2), welche gemeinsam das Schlauchleitungselement (2) und das Dichtelement (4) im Wesentlichen vollumfänglich umfassen.

5. Verbindung (1) nach einem der Ansprüche 1 bis 4,
**dadurch gekennzeichnet, dass**
das Klemmelement (6), vorzugsweise an wenigstens einem der Umfangssegmente (6.1, 6.2) gemäß Anspruch 4, einen sich radial erstreckenden Vorsprung (6b) aufweist, mit dem das Klemmelement in die Wellung (2a) eines als profiliertes Schlauchleitungselement ausgebildeten Schlauchleitungselements (2), vorzugsweise Wellschlauch, höchst vorzugsweise Wendelwellschlauch oder Wickelschlauch, in Eingriff bringbar oder gebracht ist.

6. Verbindung (1) nach Anspruch 5,
**dadurch gekennzeichnet, dass**
der Vorsprung (6b) an einem dem Flanschelement (5) abgewandten Ende des Klemmelements (6) angeordnet ist.

7. Verbindung (1) nach Anspruch 5 oder 6,
**dadurch gekennzeichnet, dass**
der Vorsprung (6b) an seiner radialen Stirnseite eine zur Wellung (2a) des Schlauchleitungselements (2) komplementäre Profilierung aufweist.

8. Verbindung (1) nach einem der Ansprüche 5 bis 7,
**dadurch gekennzeichnet, dass**
der Vorsprung (6b) im Längsschnitt im Wesentlichen rechteckig ausgebildet ist.

9. Verbindung (1) nach einem der Ansprüche 5 bis 8,
**dadurch gekennzeichnet, dass**
der Vorsprung (6b) sich über einen Bruchteil des Umfangs erstreckt, vorzugsweise über etwa 10° bis 40°, höchst vorzugsweise etwa 20° bis 30°.

10. Verbindung (1) nach einem der Ansprüche 1 bis 9,
**dadurch gekennzeichnet, dass**
das Dichtelement (4) einen, vorzugsweise umlaufenden, radialen Vorsprung (4a) aufweist, der sich von dem Schlauchleitungselement (2) weg erstreckt, und der vorzugsweise das Flanschelement (5) und/oder das Klemmelement (6) im Bereich des Verbindungsendes in radialer Richtung übergreift.

11. Verbindung (1) nach einem der Ansprüche 1 bis 10,
**dadurch gekennzeichnet, dass**
das Klemmelement (6) einen, vorzugsweise umlaufenden, radialen Vorsprung (6c) aufweist, der sich von dem Schlauchleitungselement (2) weg erstreckt, und der vorzugsweise das Flanschelement (5) im Bereich des Verbindungsendes in radialer Richtung übergreift.

12. Verbindung (1) nach einem der Ansprüche 1 bis 11,
**dadurch gekennzeichnet, dass**
das Dichtelement (4) an seiner dem Schlauchleitungselement (2) zugewandten Innenfläche zumindest abschnittweise und zumindest vor Herstellung einer dichten Verbindung im Wesentlichen eben ausgebildet ist.

13. Verbindung (1) nach einem der Ansprüche 1 bis 12,
**dadurch gekennzeichnet, dass**
das Dichtelement (4) an seiner dem Schlauchleitungselement (2) zugewandten Innenfläche zumindest abschnittweise mit einer zur Profilierung des Schlauchleitungselements komplementären Formgebung als Formdichtung ausgebildet ist.

14. Verbindung (1) nach einem der Ansprüche 1 bis 13,
**dadurch gekennzeichnet, dass**
das Dichtelement (4) in einem Elastomer, vorzugsweise EPDM, ausgebildet ist.

15. Verbindung (1) nach einem der Ansprüche 1 bis 13,
**dadurch gekennzeichnet, dass**
das Dichtelement (4) in Graphit oder in Blähton oder in einem vorzugsweise keramischen Material, welches bei Wärmebeaufschlagung sein Volumen vergrößert, beispielsweise Interam® von 3M™ oder einem vergleichbaren Material, ausgebildet ist.
